(19) **Europäisches Patentamt**

**European Patent Office**

**Office européen des brevets**

(11) **EP 0 720 903 B1**

(12) **EUROPÄISCHE PATENTSCHRIFT**

(45) Veröffentlichungstag und Bekanntmachung des Hinweises auf die Patenterteilung:
**13.01.1999 Patentblatt 1999/02**

(51) Int. Cl.$^6$: **B29C 45/17**, F04B 41/02

(21) Anmeldenummer: **95117561.1**

(22) Anmeldetag: **08.11.1995**

(54) **Verfahren zur Herstellung von Kunststoffgegenständen aus thermoplastischem Material**

Method for fabricating plastic objects from thermoplastic material

Méthode pour la fabrication de pièces en matière thermoplastique

(84) Benannte Vertragsstaaten:
**AT CH DE ES FR GB IT LI NL**

(30) Priorität: **21.12.1994 DE 4445622**

(43) Veröffentlichungstag der Anmeldung:
**10.07.1996 Patentblatt 1996/28**

(73) Patentinhaber: **Battenfeld GmbH**
**D-58540 Meinerzhagen (DE)**

(72) Erfinder:
- **Gosdin, Michael, Dr.**
  **D-58540 Meinerzhagen (DE)**
- **Eckardt, Helmut**
  **D-58540 Meinerzhagen (DE)**

(56) Entgegenhaltungen:
**EP-A- 0 250 080          EP-A- 0 602 972**
**WO-A-92/01545            DE-U- 9 316 984**

**Beschreibung**

Die Erfindung betrifft ein Verfahren zum Herstellen hohler Kunststoffgegenstände aus thermoplastischem Material, das die Schritte aufweist:

- Einspritzen einer ausreichenden Menge Kunststoffschmelze in die Kavität eines Formwerkzeugs entlang eines Schmelzefließwegs, der sich von einer Kunststoffplastifiziereinheit durch eine Kunststoffeinspritzdüse bis ins Formwerkzeug erstreckt;
- Gleichzeitiges und/oder anschließendes Eingeben eines Druckfluids, insbesondere Druckgases, in die Schmelze, so daß die ins Formwerkzeug eingebrachte Schmelze in der Kavität verteilt und an die Wandungen des Formwerkzeugs angepreßt wird, wobei das Druckfluid von einem Druckspeicher in die Schmelze geleitet wird und der Druckspeicher von einem ein Antriebselement enthaltenden Verdichter mit Fluid versorgt wird;
- Abkühlenlassen des so hergestellten Formteils auf eine Temperatur unterhalb des Schmelzpunkts des thermoplastischen Materials; und
- Entlastung der Kavität vom Druck des Druckfluids.

Ein Verfahren der gattungsgemäßen Art ist aus der DE 37 34 164 A1 bekannt. Dort wird ein Verfahren zum Spritzgießen von Hohlkörper-Formteilen aus thermoplastischem Kunststoff offenbart, bei dem zunächst eine zur Ausbildung des Formteils ausreichende Menge des schmelzflüssigen Kunststoffs in die Spritzform gedrückt wird. Dann wird in die Spritzform und den thermoplastischen Kunststoff ein strömungsfähiges Medium, insbesondere Gas, mit einem Druck eingepreßt, der die Kunststoffmasse gleichmäßig über die Oberfläche des Formhohlraums unter Bildung eines Hohlkörpers verteilt. Daraufhin wird der unter Mediendruck gehaltene Hohlkörper in der Spritzform abgekühlt. Schließlich wird der Mediendruck aus dem Hohlkörper abgelassen und dann das Formteil entformt sowie aus der Spritzform entnommen.

Die Zurverfügungstellung des Druckfluids wird von einem Druckspeicher bewerkstelligt, der mit einem Verdichter verbunden ist. Der Verdichter fördert das Gas in den Druckspeicher, und zwar in der Weise, daß dieser Druckspeicher immer unter einem vorgegebenen Mindestdruck gehalten wird. Dies wird mittels aus dem Stand der Technik bekannten Elementen realisiert, und zwar wie folgt:

Im Druckspeicher befindet sich ein Drucksensor, der den aktuell vorhandenen Gasdruck feststellt. Der Drucksensor liefert sein Signal an eine Steuerung, die das Antriebselement (Motor) des Verdichters steuert. Der Steuerung ist eine Ober- und Untergrenze für den Gasdruck im Druckspeicher vorgegeben. Fällt der Druck im Speicher - durch Entnahme von Druckfluid oder Leckagen - unter die Untergrenze, wird der Verdichtermotor in Gang gesetzt; dieser pumpt Fluid in den Druckspeicher nach, wodurch der Druck in diesem ansteigt. Der Verdichterantrieb ist dabei so ausreichend dimensioniert, daß auch bei einem Maximalbedarf an Druckfluid der gewünschte Druck im Druckspeicher erreicht wird. Der Motor bleibt solange in Betrieb, bis der Drucksensor das Erreichen der Obergrenze für den Druck meldet; dann wird der Verdichterantrieb abgeschaltet.

Nachteilhaft ist bei dieser Betriebsweise der Verdichter-Druckspeicher-Anlage, daß es systembedingt zu einem Kippschwing-Prozeß kommt, d. h. der Druck im Druckspeicher verläuft über der Zeit in Form einer Zick-Zack-Kurve bedingt durch den diskontinuierlichen Betrieb des Verdichters. Dies hat eine energetisch ungünstige Betriebsweise des Verdichter-Druckspeicher-Systems zur Folge, also einen ungünstigen Wirkungsgrad.

Ferner sind alle Steuer- und Regelelemente einem ständigen Ein-Aus-Schaltbetrieb ausgesetzt, was sich nachteilig auf die Lebensdauer verschiedener Bauelemente des Systems auswirkt.

Der Erfindung liegt daher die **Aufgabe** zugrunde, ein Verfahren der eingangs genannten Art zu schaffen, das diese Nachteile vermeidet und so eine energetisch bessere und weniger verschleißintensive Betriebsweise des Verdichter-Druckspeicher-Systems erlaubt.

Die **Lösung** der Aufgabe durch die Erfindung ist dadurch gekennzeichnet, daß das Antriebselement (6) des Verdichters (7) zumindest während der Herstellung einer Vielzahl von Kunststoffgegenständen auf einem zeitlich konstanten Leistungsniveau (P) gehalten wird.

Erfindungsgemäß gibt es also keine Ein-Ausschalt-Vorgänge für das Verdichter-Antriebselement mehr, sondern nur noch einen stetigen und kontinuierlichen Lauf des Antriebsmotors.

Das zeitlich konstante Leistungsniveau (P), auf dem das Antriebselement gehalten wird, ist einstellbar und ergibt sich aus dem Druckfluid-Bedarf für den individuellen Spritzgießprozeß. Für dessen Bestimmung ist vorgesehen, daß

- zunächst diejenige Arbeit (W) bestimmt wird, die vom Antriebselement (6) aufgebracht werden muß, um eine Menge Druckfluid bereitzustellen, die für eine bestimmte Anzahl von Kunststoffgegenständen während einer zugehörigen Gesamtzykluszeit (T) benötigt wird, daß dann
- die Berechnung des Leistungsniveaus (P) des Antriebselements (6) gemäß der Beziehung

$$P = W / T$$

erfolgt und daß schließlich

- dieses berechnete Leistungsniveau (P) als Grundeinstellung für die Antriebsleistung des Antriebselements (6) vorgegeben wird.

Es kann sein, daß sich im Laufe der Herstellung von Kunststoffgegenständen gewisse Fehler oder Ungenauigkeiten bei der Leistungsermittlung gemäß obiger Vorgehensweise aufsummieren, so daß im Verlauf der Zeit der Druck im Druckspeicher vom Sollwert abweicht. Erfindungsgemäß ist daher vorgesehen, daß nach der Herstellung von Kunststoffgegenständen für eine vorherbestimmte, d. h. vorgegebene Zeit bzw. nach der Herstellung einer vorgegebenen Anzahl von Gegenständen das Leistungsniveau (P) des Antriebselements (6) überprüft und gegebenenfalls angepaßt wird.

Diese Leistungsvorgabe kann durch elektrische oder elektronische, durch mechanische oder hydraulische Steuermittel erfolgen.

Vorteilhafterweise kommt dieses Verfahren bei der Großserienfertigung von Kunststoffgegenständen zum Einsatz, da sich dort i. d. R. ein sehr konstanter Mittelwert für den Leistungsbedarf des Antriebselements (6) bei kontinuierlicher Betriebsweise ermitteln läßt.

Einsetzbar ist das erfindungsgemäße Verfahren vorteilhafterweise auch beim Mehrmaschinenbetrieb, also dann, wenn eine Fluidversorgungsanlage mehrere Spritzgießmaschinen mit Druckfluid versorgt.

Durch die erfindungsgemäße Verfahrensweise sind verschiedene Vorteile festgestellt worden:

- Die Antriebsleistung für das Antriebselement des Verdichters wird minimiert, da der kontinuierliche Betriebsverlauf energetisch günstiger ist als das ständige Schalten zwischen Voll-Last und Null.
- Der Druck im Druckspeicher unterliegt geringeren Schwankungen, da erfindungsgemäß ein Mittelwert eingehalten wird und der Druck sich nicht mehr zwischen einer Unter- und Obergrenze permanent hin- und herbewegt.
- Die für die Realisierung des erfindungsgemäßen Verfahrens erforderliche Vorrichtung kann einfacher ausgeführt werden, da die Regelschaltung inclusive zugehöriger Sensoren für den Betrieb nach dem Stand der Technik entfällt.
- Die Bauelemente des Verdichter-Speicher-Systems sind nicht mehr der hohen Belastung ausgesetzt, die der konventionelle Betrieb (Ein-Aus-Schalten) bedingt, da jetzt eine gleichmäßige Systembelastung stattfindet.

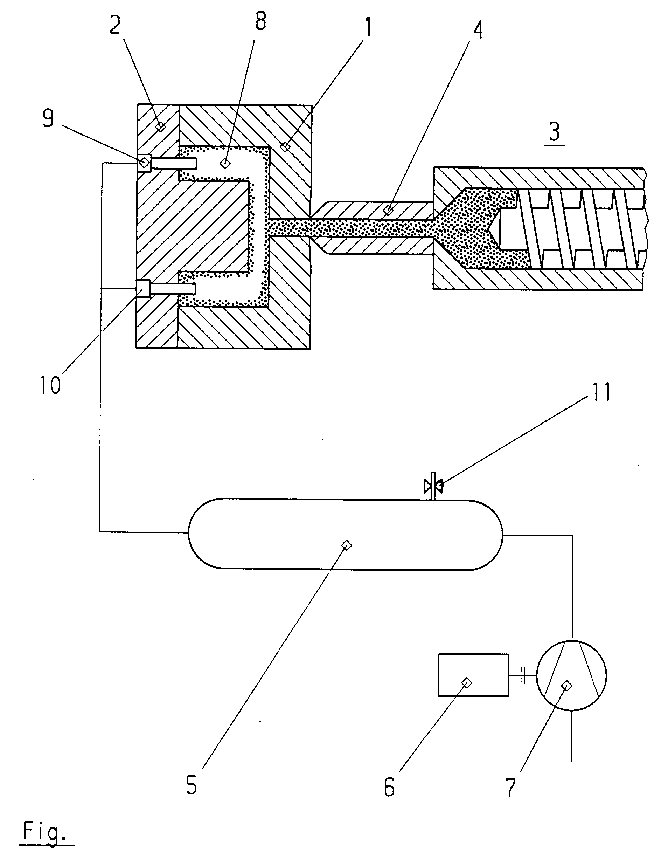

In der Zeichnung ist ein erfindungsgemäßes Ausführungsbeispiel dargestellt. Die Figur zeigt schematisch den Spritzgießprozeß mittels des erfindungsgemäßen Verfahrens.

In der Figur ist ein Formwerkzeug 1, 2 zu sehen, das aus zwei Formhälften 1 und 2 besteht. Eine Kunststoffplastifiziereinheit 3 produziert aus Kunststoffgranulat Schmelze, die über die Kunststoffeinspritzdüse 4 in die Kavität des Formwerkzeugs 1, 2 eingespritzt wird; dabei nimmt die Schmelze ihren Fließweg von der Plastifiziereinheit 3 über die Einspritzdüse 4 bis in die Kavität. Die Schmelzemenge ist ausreichend, um das gewünschte Werkstück unter Berücksichtigung der Hohlräume herzustellen.

Gleichzeitig und/oder anschließend an die Füllung der Werkzeugkavität wird ein Druckfluid in die Kavität gegeben; üblicherweise kommt hier Stickstoffgas (N$_2$) zum Einsatz, das von einem Druckspeicher 5 zur Verfügung gestellt wird. Das Druckgas verteilt die Schmelze in der Kavität und drückt sie an die Wandungen des Werkzeugs 1, 2. Wenn die Schmelze genügend abgekühlt ist, kann das Werkzeug 1, 2 entformt werden, das Werkstück 8 wird also entnommen. Im vorliegenden Falle wird das Druckfluid durch Be- und Entgasungsdüsen 9 und 10 ins Werkstück 8 eingebracht. Alternativ ist es aber auch möglich (nicht dargestellt), das Gas durch den Düsenbereich (Kunststoffeinspritzdüse 4) einzugeben.

Der Druckspeicher 5 ist mit einem Verdichter 7 durch eine Druckleitung verbunden. Der Verdichter wird von einem Antriebselement 6 angetrieben, wobei üblicherweise ein Elektromotor zum Einsatz kommt; es sind natürlich aber auch andere Antriebselemente denkbar.

Das Antriebselement wird während des gesamten Fertigungsprozesses - zumindest während der Fertigung eines definierten Loses von Kunststoffgegenständen - auf einem zeitlich konstanten Leistungsniveau P betrieben, d. h. P stellt eine konstante Leistung dar, die vom Antriebselement 6 aufgebracht wird.

Diese Leistung P ergibt sich als Verhältnis von über einen definierten Zeitraum zu erbringender Arbeit W, um die gewünschten hohlen Kunststoffgegenstände zu fertigen, zu der hierfür notwendigen Gesamtzykluszeit T, also

$$P = W / T.$$

Daher bedarf es keines konventionellen Ein-Aus-Schaltvorganges des Antriebselements, um die erforderliche Menge Druckfluid zur Verfügung zu stellen.

Sollte die mittlere Leistung P fehlerhafterweise zu gering sein, stellt die Kapazität des Druckspeichers 5 einen Puffer dar, der auch dann eine ordnungsgemäße Fertigung erlaubt.

Sollte die mittlere Leistung P zu hoch eingestellt sein, wird langfristig mehr Druckfluid produziert als benötigt wird. Dann steigt der Druck im Speicher permanent an. Für diesen Fall ist ein Überdruckventil 11 vorgesehen, wodurch ein unzulässiges und evtl. auch gefährliches Ansteigen des Drucks im Speicher verhindert wird. Das aus dem Überdruckventil entweichende Gas wird vorzugsweise in die Stickstoffversorgungsleitung rückgeführt, so daß es zu keinem unnötigen Gasverlust kommt.

Zur Erhöhung der Effizienz des Verfahrens wird in praxi zunächst die sich gemäß obiger Formel ergebende Leistung P als Grundeinstellung vor der Inbetriebnahme der Spritzgießmaschine vorgegeben. Die Leistung wird also ausgehend vom erwarteten Fluidverbrauch festgelegt. Ist der erwartete Verbrauch identisch mit dem tatsächlichen, läuft der Verdichter im Dauerbetrieb genau in der Weise, daß sich ein stets konstant bleibender Solldruck im Druckspeicher einstellt.

Im allgemeinen ist jedoch nicht auszuschließen, daß sich gewisse Fehler bei der Leistungsberechnung ergeben, so daß langfristig der Druck im Speicher vom Solldruck abweicht. Daher wird der Druck nach einer vorgegebenen Fertigungszeit oder nach Herstellen einer definierten Anzahl von Werkstücken überprüft und das Leistungsniveau des Antriebselement 6 gegebenenfalls angepaßt. Dies kann automatisch, veranlaßt durch die Maschinensteuerung, erfolgen.

Nach einer vorgegebenen Zeit wird der Druck im Druckspeicher abgefragt. Bei Abweichungen vom gewünschten Solldruck wird das Leistungsniveau P entsprechend modifiziert. Dies geschieht beispielsweise anhand einer in der Maschinensteuerung abgelegten Wertetabelle folgender Form:

| Druckabweichung ggü. Solldruck um | - 4% | - 3 % | - 2 % | - 1 % | 0 % | + 1 % | + 2 % | + 3 % | + 4 % |
|---|---|---|---|---|---|---|---|---|---|
| Anpassung des Leistungsniveaus um | + 5 % | + 3,5 % | + 2,2 % | + 1 % | 0 % | - 1 % | - 2,3 % | - 3,7 % | - 4,8 % |

Zwischen den Stützwerten werden Interpolationen vorgenommen. Die Zahlenwerte in obiger Tabelle ergeben sich experimentell für jedes individuelle Verdichter-Speicher-System und der zugrundeliegenden Fertigungsaufgabe. Die Überprüfung und ggf. erforderliche Anpassung der Antriebsleistung kann sich in regelmäßigen Abständen wiederholen.

Als Steuer- bzw. Regelelemente für das Leistungsniveau kommen z. B. elektronische Elemente zum Einsatz, die einen drehzahlregelbaren Elektromotor steuern. Möglich ist jedoch auch - bei Einsatz eines mit konstanter Drehzahl arbeitenden Elektromotors - die Verwendung eines stufenlosen mechanischen Getriebes, mit dem die Drehzahl des Verdichters und damit die Leistung angepaßt wird.

**Patentansprüche**

1. Verfahren zum Herstellen hohler Kunststoffgegenstände aus thermoplastischem Material, das die Schritte aufweist:

a) Einspritzen einer ausreichenden Menge Kunststoffschmelze in die Kavität eines Formwerkzeugs (1, 2) entlang eines Schmelzefließwegs, der sich von einer Kunststoffplastifiziereinheit (3) durch eine Kunststoffeinspritzdüse (4) bis ins Formwerkzeug (1, 2) erstreckt;
b) Gleichzeitiges und/oder anschließendes Eingeben eines Druckfluids, insbesondere Druckgases, in die Schmelze, so daß die ins Formwerkzeug (1, 2) eingebrachte Schmelze in der Kavität verteilt und an die Wandungen des Formwerkzeugs (1, 2) angepreßt wird, wobei das Druckfluid von einem Druckspeicher (5) in die Schmelze geleitet wird und der Druckspeicher (5) von einem ein Antriebselement (6) enthaltenden Verdichter (7) mit Fluid versorgt wird;
c) Abkühlenlassen des so hergestellten Formteils (8) auf eine Temperatur unterhalb des Schmelzpunkts des thermoplastischen Materials; und
d) Entlastung der Kavität vom Druck des Druckfluids;
**dadurch gekennzeichnet,**
daß das Antriebselement (6) des Verdichters (7) zumindest während der Herstellung einer Vielzahl von Kunststoffgegenständen auf einem zeitlich konstanten Leistungsniveau (P) gehalten wird.

**2.** Verfahren nach Anspruch 1, dadurch gekennzeichnet, daß das zeitlich konstante Leistungsniveau (P) des Antriebselements (6) durch folgende Schritte bestimmt wird:

a) Bestimmung derjenigen Arbeit (W), die vom Antriebselement (6) aufgebracht werden muß, um eine Menge Druckfluid bereitzustellen, die für eine bestimmte Anzahl von Kunststoffgegenständen während einer zugehörigen Gesamtzykluszeit (T) benötigt wird;

b) Berechnung des Leistungsniveaus (P) des Antriebselements (6) gemäß der Beziehung:

$$P = W / T;$$

c) Vorgabe des berechneten Leistungsniveaus (P) als Grundeinstellung für die Antriebsleistung des Antriebselements (6).

**3.** Verfahren nach Anspruch 1 oder Anspruch 2, dadurch gekennzeichnet, daß nach der Herstellung von Kunststoffgegenständen für eine vorherbestimmte Zeit das Leistungsniveau (P) des Antriebselements (6) überprüft und gegebenenfalls angepaßt wird.

**4.** Verfahren nach mindestens einem der Ansprüche 1 bis 3, dadurch gekennzeichnet, daß das Leistungsniveau (P) des Antriebselements (6) durch elektrische oder elektronische Steuermittel vorgegeben wird.

**5.** Verfahren nach mindestens einem der Ansprüche 1 bis 3, dadurch gekennzeichnet, daß das Leistungsniveau (P) des Antriebselements (6) durch mechanische Steuermittel vorgegeben wird.

**6.** Verfahren nach mindestens einem der Ansprüche 1 bis 3, dadurch gekennzeichnet, daß das Leistungsniveau (P) des Antriebselements (6) durch hydraulische Steuermittel vorgegeben wird.

**7.** Verfahren nach mindestens einem der Ansprüche 1 bis 6, dadurch gekennzeichnet, daß es bei der Großserienfertigung von Kunststoffgegenständen eingesetzt wird.

**8.** Verfahren nach mindestens einem der Ansprüche 1 bis 7, dadurch gekennzeichnet, daß ein Druckspeicher (5) mehrere Spritzgießmaschinen mit Druckfluid versorgt.

**Claims**

**1.** Process for producing hollow plastic objects made from thermoplastic material, having the steps:

a) injecting an adequate quantity of plastic melt into the cavity of a mould (1, 2) along a melt flow path which extends from a plastic plastifying unit (3) through a plastic injection nozzle (4) into the mould (1, 2);

b) simultaneous and/or subsequent addition of a compressed fluid, in particular compressed gas, into the melt, so that the melt introduced into the mould (1, 2) is distributed in the cavity and pressed against the walls of the mould (1, 2), wherein the compressed fluid is passed into the melt from a pressure reservoir (5) and the pressure reservoir (5) is supplied with fluid by a compressor (7) containing a drive element (6);

c) allowing the moulding (8) thus produced to cool to a temperature below the melting point of the thermoplastic material; and

d) relieving the cavity of the pressure of the compressed fluid;
characterised in that the drive element (6) of the compressor (7) is maintained at a temporally constant power level (P) at least during the production of a number of plastic objects.

**2.** Process according to claim 1, characterised in that the temporally constant power level (P) of the drive element (6) is determined by the following steps:

a) determination of that work (W) which has to be applied by the drive element (6) to provide a quantity of compressed fluid which is required for a certain number of plastic objects during one associated total cycle time (T);

b) calculation of the power level (P) of the drive element (6) according to the relationship:

$$P = W/T;$$

c) presetting the calculated power level (P) as the basic setting for the drive capacity of the drive element (6).

3. Process according to claim 1 or claim 2, characterised in that after producing plastic objects for a predetermined time, the power level (P) of the drive element (6) is monitored and optionally adjusted.

4. Process according to at least one of claims 1 to 3, characterised in that the power level (P) of the drive element (6) is preset by electrical or electronic control means.

5. Process according to at least one of claims 1 to 3, characterised in that the power level (P) of the drive element (6) is preset by mechanical control means.

6. Process according to at least one of claims 1 to 3, characterised in that the power level (P) of the drive element (6) is preset by hydraulic control means.

7. Process according to at least one of claims 1 to 6, characterised in that it is used for mass production of plastic objects.

8. Process according to at least one of claims 1 to 7, characterised in that a pressure reservoir (5) supplies several injection moulding machines with compressed fluid.

**Revendications**

1. Procédé de fabrication d'objets creux en matière thermoplastique, qui présente les étapes suivantes :

a) injection d'une quantité suffisante de matière plastique fondue dans la cavité d'un moule (1, 2) le long d'un chemin d'écoulement qui s'étend d'un bloc de plastification (3), en passant par une filière (4), jusque dans le moule (1, 2),

b) introduction simultanée et/ou postérieure d'un fluide sous pression, en particulier d'un gaz sous pression, dans la matière fondue, de sorte que la matière fondue introduite dans le moule (1, 2) se répartit dans la cavité et est pressée contre les parois du moule (1, 2), le fluide sous pression étant envoyé dans la matière fondue depuis un réservoir sous pression (5) qui est alimenté en fluide par un compresseur (7) contenant un élément moteur (6),

c) refroidissement de la pièce moulée (8) ainsi fabriquée à une température inférieure au point de fusion de la matière thermoplastique, et

d) décharge de la cavité de la pression du fluide sous pression,
caractérisé par le fait
que l'élément moteur (6) du compresseur (7) est maintenu à un niveau de puissance constant dans le temps (P) au moins pendant la fabrication d'un grand nombre d'objets en matière plastique.

2. Procédé selon la revendication 1, caractérisé par le fait que le niveau de puissance constant dans le temps (P) de l'élément moteur (6) est déterminé par les opérations suivantes :

a) détermination du travail (W) que l'élément moteur (6) doit accomplir pour la fourniture d'une quantité de fluide sous pression nécessaire à un nombre déterminé d'objets en matière plastique pendant un temps de cycle total correspondant (T),

b) calcul du niveau de puissance (P) de l'élément moteur (6) suivant la relation :

$$P = W/T,$$

c) prise du niveau de puissance calculé (P) comme réglage de base de la puissance motrice de l'élément moteur (6).

3. Procédé selon l'une des revendications 1 et 2, caractérisé par le fait que, après la fabrication d'objets en matière plastique pendant une durée fixée à l'avance, le niveau de puissance (P) de l'élément moteur (6) est contrôlé et éventuellement adapté.

4. Procédé selon au moins une des revendications 1 à 3, caractérisé par le fait que le niveau de puissance (P) de l'élément moteur (6) est fixé par des moyens de commande électriques ou électroniques.

5. Procédé selon au moins une des revendications 1 à 3, caractérisé par le fait que le niveau de puissance (P) de l'élément moteur (6) est fixé par des moyens de commande mécaniques.

6. Procédé selon au moins une des revendications 1 à 3, caractérisé par le fait que le niveau de puissance (P) de l'élément moteur (6) est fixé par des moyens de commande hydrauliques.

7. Procédé selon au moins une des revendications 1 à 6, caractérisé par le fait qu'il est employé pour la fabrication en grande série d'objets en matière plastique.

8. Procédé selon au moins une des revendications 1 à 7, caractérisé par le fait qu'un réservoir sous pression (5) alimente en fluide sous pression plusieurs machines de moulage par injection.

Fig.